# DEMANDE DE BREVET EUROPEEN

(11) **EP 1 270 211 A1**
(43) Date de publication de la demande: **02.01.2003**
(21) Numéro de dépôt: 02291412.1
(22) Date de dépôt: 07.06.2002
(51) Int. Cl.: B32B 27/34, C08L 27/16, C09D 127/06, C08J 5/12, C08J 7/04, B32B 7/10

(54) **Structure comprenant une couche en polymère fluoré et un liant à base de pipérazine**

(30) Priorité: 19.06.2001 FR 0108028
(71) Demandeur: Atofina, 92800 Puteaux (FR)
(72) Inventeur: Bussi, Philippe, 76000 Rouen (FR); Silagy, David, 27000 Evreux (FR); Lacroix, Christophe, 27700 Harquency (FR)
(74) Mandataire: Neel, Henry

(57) **Abrégé**

La présente invention concerne une structure comprenant une couche de polymère fluoré et directement attachée sur l'une de ses faces une couche de liant à base de polyamide qui résulte de la condensation d'au moins un diacide et d'au moins une diamine de formule (1) suivante : 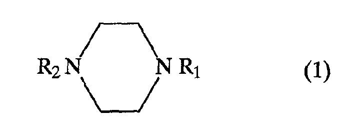 dans laquelle :
R₁ représente H ou -Z1-NH2 et Z1 représente un alkyle, un cycloalkyle ou un aryle ayant jusqu'à 15 atomes de carbone, et R₂ représente H ou -Z2-NH2 et Z2 représente un alkyle, un cycloalkyle ou un aryle ayant jusqu'à 15 atomes de carbone,
R₁ et R₂ pouvant être identiques ou différents.

Le liant peut être aussi un copolymère à blocs polyamides et blocs polyethers, les blocs polyamides résultant de la condensation d'au moins un diacide et d'au moins une diamine de formule (1).

L'invention concerne aussi une structure comprenant respectivement une couche en polymère fluoré, la couche de liant et une couche de substrat.

L'invention concerne aussi une structure comprenant respectivement une couche du liant, une couche de polymère fluoré et une autre couche du liant. Cette structure peut être disposée entre deux couches de substrat, elle peut se presenter sous forme de plaque, de film, de profilé ou de tube. Elle est particulièrement utile sous forme de tube de transport d'essence entre le réservoir et le dispositif d'injection dans les moteurs des automobiles.

## Description

### [Domaine de l'invention]

La présente invention concerne une structure comprenant une couche en polymère fluoré et un liant qui est un polymère à base de pipérazine.

Les polymères fluorés se caractérisent par une bonne résistance thermique, une bonne résistance chimique notamment aux solvants ainsi qu'une bonne résistance aux rayonnements UV par exemple. Ils sont aussi dotés de qualités d'imperméabilité aux gaz et aux liquides et possèdent des propriétés d'isolation électrique. Néanmoins, leur adhérence est très faible voir nulle sur un grand nombre de susbtrats. La structure de l'invention peut être collée à chaud par pressage sur le substrat du coté du liant. Le substrat peut être un métal, du bois, du verre ou un polymère. L'invention concerne aussi une structure comprenant respectivement une couche en polymère fluoré, une couche de liant à base de pipérazine et une couche de substrat. Les couches de polymère fluoré et de substrat peuvent être des feuilles ou des films. Ainsi la structure de l'invention peut être un film tricouche. La structure de l'invention peut être aussi être obtenue par lamination.

### [l'art antérieur et le problème technique]

Le brevet EP 450994 décrit un liant constitué d'un mélange de PVDF, de PMMA et copolymère coeur écorce (core shell) à écorce acrylique. Ce liant est utilisé pour faire adhérer un film de PVDF sur un substrat en ABS.

Le brevet WO 9605964 décrit le collage de films de PVDF sur des polyoléfines ou des polyamides. Selon ce brevet on dépose une polyamine telle que par exemple l'hexamethylène diamine en solution dans un alcool sur une face du film de PVDF et on presse à chaud le film de PVDF revêtu de la diamine sur le film de polyoléfine ou polyamide, la face revêtue de la diamine étant disposée du coté du film de polyoléfine ou polyamide.

Le brevet EP 0918071 décrit un polyamide contenant des motifs pipérazine et terminé amine comme agent de reticulation des résines époxy. Ceci permet d'augmenter la résistance à la corrosion et l'adhésion sur support humide.

Le brevet EP 378205 décrit un polyamide obtenu par condensation d'un acide gras, d'une diamine et d'une alkylpiperazine. Ce polyamide est utilisé pour coller du PVC sur des métaux.

Le brevet GB 2173809 est proche du précédent, il décrit un polyamide obtenu par condensation d'un acide gras, d'une diamine, de piperazine et d'un polyetherdiamine. Ce polyamide est utilisé pour coller du poly(chlorure de vinylidène) sur lui même ou sur du PVC.

Les brevets US 4611051 et FR 2386573 sont proches des deux précédents.

Les quatre brevets précédents décrivant des liants en polyamide à base de pipérazine ne décrivent pas et ne suggèrent pas d'utiliser ces liants pour du PVDF.

Le liant décrit dans EP 450994 est un mélange de 3 polymères, il est nécessaire de le préparer par mélange des 3 polymères à l'état fondu. De plus pour le coextruder avec le PVDF et l'ABS il est nécessaire de le refondre, ou de l'utiliser à la suite de sa préparation, à une température qui est au moins la température de fusion du PVDF (195°C). Si on ne respecte pas cette température l'adhésion du PVDF et de l'ABS n'est pas bonne.

On a maintenant trouvé que des polyamides qui résultent de la condensation de la pipérazine (ou d'une aminoalkylpipérazine) avec un diacide étaient de bons liants entre le PVDF et un substrat. De plus ces liants sont faciles à fabriquer et se mettent en oeuvre dans une large plage de température garantissant une bonne adhésion du PVDF sur le substrat.

### [Brève description de l'invention]

La présente invention concerne une structure comprenant une couche de polymère fluoré et directement attachée sur l'une de ses faces une couche de liant à base de polyamide qui résulte de la condensation d'au moins un diacide et d'au moins une diamine de formule (1) suivante : 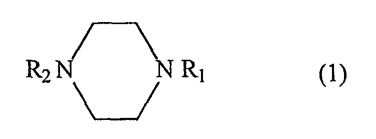 dans laquelle :
R₁ représente H ou -Z1-NH2 et Z1 représente un alkyle, un cycloalkyle ou un aryle ayant jusqu'à 15 atomes de carbone,
et R₂ représente H ou -Z2-NH2 et Z2 représente un alkyle, un cycloalkyle ou un aryle ayant jusqu'à 15 atomes de carbone,
R₁ et R₂ pouvant être identiques ou différents.

Le liant peut comprendre d'autres motifs choisis parmi les acides alpha omega amino carboxyliques et des diamines différentes de la diamine de la formule (1).

Le liant peut être aussi un copolymère à blocs polyamides et blocs polyethers, les blocs polyamides résultant de la condensation d'au moins un diacide et d'au moins une diamine de formule (1). Les blocs polyamides peuvent comprendre comme ci dessus d'autres motifs choisis parmi les acides alpha omega amino carboxyliques et des diamines différentes de la diamine de la formule (1).

La structure comprenant une couche de polymère fluoré et directement attachée sur l'une de ses faces la couche de liant peut être realisée par coextrusion ou par couchage de la couche de liant sur la couche de polymère fluoré. Elle peut être collée à chaud par pressage sur un substrat du coté du liant. Elle peut être aussi réalisée par coextrusion de la couche de polymère fluoré et de la couche de liant et simultanément collée sur le substrat.

L'invention concerne aussi une structure comprenant respectivement une couche en polymère fluoré, la couche de liant et une couche de substrat. Les couches de polymère fluoré et de substrat peuvent être par exemple des feuilles, des films, des profilés ou des tubes. Ainsi la structure de l'invention peut être un film ou un tube tricouche. Cette structure peut être aussi realisée directement par coextrusion des 3 couches. On peut aussi coextruder la couche de liant et la couche de substrat ou coucher la couche de liant sur le substrat puis coller simultanément ou ultérieurement à chaud ce bicouche substrat-liant sur le polymère fluoré du coté du liant.

L'invention concerne aussi une structure comprenant respectivement une couche du liant, une couche de polymère fluoré et une autre couche du liant. Cette structure peut être réalisée par coextrusion ou par couchage du liant sur chaque face d'une couche de polymère fluoré ou encore par coextrusion d'une couche de polymère fluoré et d'une couche de liant puis couchage d'une autre couche de liant du coté du polymère fluoré sur le bicouche polymère fluoré-liant. Cette structure peut être disposée entre deux couches de substrat, elle peut se presenter sous forme de plaque, de film, de profilé ou de tube. Elle est particulièrement utile sous forme de tube de transport d'essence entre le réservoir et le dispositif d'injection dans les moteurs des automobiles.

### [Description détaillée de l'invention]

**S'agissant du polymère fluoré** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère on peut citer le fluorure de vinyle; le fluorure de vinylidène (VF2); le trifluoroethylene (VF3); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro( 1,3 -dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogene ou F(CF2)z et z vaut 1, 2, 3 ou 4; le produit de formule R3OCF=CH2 dans laquelle R3 est F(CF2)z- et z est 1, 2, 3 or 4; le perfluorobutyl ethylene (PFBE); le 3,3,3-trifluoropropene et le 2-trifluoromethyl-3 ,3 ,3 -trifluoro- 1 -propene.

Le polymère fluoré peut être un homopolymère ou un copolymère, il peut aussi comprendre des monomères non fluorés tels que l'éthylène.

Avantageusement, le polymère fluoré est choisi parmi :
- Les homo- et copolymères du fluorure de vinylidène (VF2) contenant de préférence au moins 50% en poids de VF2, le copolymère étant choisi parmi le chlorotrifluoroéthylène (CTFE), l'hexafluoropropylène (HFP), le trifluoroéthylène (VF3) et le tétrafluoroéthylène (TFE),
- Les homo- et copolymères du trifluoroéthylène (VF3),
- Les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VF2 et/ou VF3.

De préférence, le polymère fluoré est du poly(fluorure de vinylidène) (PVDF) homopolymère. Avantageusement, le PVDF a une viscosité allant de 100 Pa.s à 2000 Pa.s, la viscosité étant mesurée à 230°C, à un gradient de cisaillement de 100 s⁻¹ à l'aide d'un rhéomètre capillaire. En effet, ces PVDF sont bien adaptés à l'extrusion et a l'injection. De préférence, le PVDF a une viscosité allant de 300 Pa.s à 1200 Pa.s, la viscosité étant mesurée à 230°C, à un gradient de cisaillement de 100s⁻¹ à l'aide d'un rhéomètre capillaire.

Ainsi, les PVDF commercialisés sous la marque KYNAR® 710 ou 720 sont parfaitement adaptés pour cette formulation.

Cette couche de polymère fluoré peut comprendre des additifs, des charges, un ou plusieurs produits électroconducteurs, des modifiants choc du type core shell (coeur écorce) acrylique, un polymère (P1) constitué essentiellement de motifs (meth)acrylate d'alkyle et pouvant contenir un modifiant choc acrylique du type core shell, des copolymères à blocs et particulièrement ceux du type ABC. Avantageusement cette couche contient au moins 50 % en poids de polymère fluoré.

A titre d'exemple de produit électroconducteur on peut citer les métaux et les produits à base de carbone. A titre d'exemple de produits à base de carbone on peut citer le graphite, le noir de carbone et les fibres de carbone.

Le polymère (P1) constitué essentiellement de motifs (meth)acrylate d'alkyle peut comprendre aussi des fonctions acide, chlorure d'acide, alcool, anhydride. A titre d'exemple de polymère (P1) on peut citer les homopolymères d'un (méth)acrylate d'alkyle. Des (méth)acrylates d'alkyle sont décrits dans KIRK-OTHMER, Encyclopedia of chemical technology, 4 ème édition dans le Vol 1 pages 292-293 et dans le Vol 16 pages 475-478. On peut encore citer des copolymères d'au moins deux de ces (méth)acrylates et des copolymères d'au moins un (méth)acrylate avec au moins un monomère choisi parmi l'acrylonitrile, le butadiène, le styrène, l'isoprène pourvu que la proportion de (meth)acrylate soit d'au moins 50% en moles. (P1) est avantageusement le PMMA. Ces polymères (P1) sont soit constitués des monomères et éventuellement des comonomères cités plus haut et ne contiennent pas de modifiant choc soit ils contiennent en plus un modifiant choc acrylique. Les modifiants choc acryliques sont par exemple des copolymères statistiques ou sequencés d'au moins un monomère choisi parmi le styrène, le butadiène, l'isoprène et d'au moins un monomère choisi parmi l'acrylonitrile et les (meth)acrylate d'alkyle, ils peuvent être de type core-shell. Ces modifiants choc acryliques peuvent être mélangés avec le polymère (P1) une fois préparé ou être introduit au cours de la polymérisation de (P1) ou préparés simultanément au cours de la polymérisation de (P1). La quantité de modifiant choc acrylique peut être par exemple de 0 à 30 parties pour 100 à 70 parties de (P1) et avantageusement de 5 à 20 parties pour 95 à 20 parties de (P1). On ne sortirait pas du cadre de l'invention si (P1) était un mélange de deux ou plusieurs des polymères précédents.

S'agissant du copolymère tribloc ABC Le copolymère à blocs comportant au moins trois blocs A, B et C est tel que le bloc A est relié au bloc B et le bloc B au bloc C au moyen d'une ou plusieurs liaisons simples covalentes. Les blocs A, B et C sont incompatibles entre eux et A est compatible avec le polymère fluoré.

Avantageusement le bloc A est choisi parmi les homo- et copolymères d'(alkyl)acrylate d'alkyle et par exemple de méthacrylate de méthyle (MAM) et/ou d'acrylate de méthyle ou d'éthyle et/ou celles dérivant d'acétate de vinyle. Avantageusement, le bloc A est du Poly(méthacrylate de méthyle) (PMMA). De préférence, ce PMMA est syndiotactique et sa température de transition vitreuse Tg_{(A)}, mesurée par analyse thermique différentielle, est de +120°C à +140°C.

Avantageusement la Tg de B est inférieure à 0°C et de préférence inférieure à - 40°C.

Le monomère utilisé pour synthétiser le bloc B élastomérique peut être un diène choisi parmi le butadiène, l'isoprène, le 2,3-diméthyl-1,3-butadiène, le 1,3-pentadiène, le 2-phényl-1,3-butadiène. B est choisi avantageusement parmi les poly(diènes) notamment poly(butadiène), poly(isoprène) et leurs copolymères statistiques, ou encore parmi les poly(diènes) partiellement ou totalement hydrogénés. Parmi les polybutadiènes on utilise avantageusement ceux dont la Tg est la plus faible, par exemple le polybutadiène-1,4 de Tg ( vers -90° C) inférieure à celle du polybutadiène-1,2. (vers 0° C). Les blocs B peuvent aussi être hydrogènés. On effectue cette hydrogénation selon les techniques habituelles.

Le monomère utilisé pour synthétiser le bloc B élastomérique peut être aussi un (meth)acrylate d'alkyle, on obtient les Tg suivantes entre parenthèses suivant le nom de l'acrylate: l'acrylate d'éthyle (-24°C), l'acrylate de butyle, (-54°C), l'acrylate de 2-éthylhexyle (-85°C), l'acrylate d'hydroxyéthyle (-15°C) et le méthacrylate de 2-éthylhexyle (-10°C). On utilise avantageusement l'acrylate de butyle. Les acrylates sont différents de ceux du bloc A pour respecter la condition de B et A incompatibles.

De préférence les blocs B sont constitués en majorité de polybutadiène-1,4.

De préférence, le bloc C a une température de transition vitreuse Tg_{(C)} ou une température de fusion Tf_{(C)} supérieure à la Tg_{(B)} du bloc B. Cette caractéristique confère la possibilité que le bloc C soit à l'état vitreux ou soit dans un état partiellement cristallin et le bloc B à l'état élastomérique, pour une même température d'utilisation Tp.

Avantageusement, le bloc C est choisi parmi les homopolymères ou les copolymères du styrène ou de l'α-méthylstyrène.

Les triblocs qui contiennent des séquences dérivant d'(alkyl)acrylate d'alkyle peuvent notamment être préparés par polymérisation anionique par exemple selon les procédés décrits dans les demandes de brevet EP 524.054 et EP 749.987.

De préférence, le tribloc ABC est du Poly (méthyle méthacrylate-*b*-butadiène-*b*-styrène).

Le copolymère tribloc ABC peut contenir, comme produits secondaires de sa synthèse, un copolymère dibloc B-C et éventuellement de l'homopolymère C. Le copolymère tribloc ABC peut aussi contenir, comme produits secondaires de sa synthèse, un copolymère dibloc A-B et éventuellement de l'homopolymère A.

En effet, la synthèse d'un copolymère tribloc se fait préférentiellement en réunissant successivement le bloc A au bloc B puis au bloc C ou inversement le bloc C au bloc B puis au bloc A suivant la nature des trois blocs A, B et C. Le bloc A étant par définition celui qui est compatible avec le polymère fluoré. Le copolymère tribloc ABC peut aussi contenir des copolymères blocs linéaires symétriques ou en étoiles du type ABA ou CBC.

Avantageusement la quantité totale en poids des produits secondaires de synthèse c'est à dire de ces homopolymères A, C ou copolymères blocs AB, BC, ABA et CBC est inférieure à 2 fois la quantité de tribloc ABC. De préférence cette quantité est inférieure à une fois et mieux encore 0,5 fois la quantité de tribloc ABC. Plus précisément les produits secondaires sont essentiellement le dibloc BC, la quantité de BC peut être comprise entre 25 et 35 parties en poids pour respectivement 75 à 65 parties de ABC et est avantageusement d'environ 30 parties pour 70 parties de ABC.

La masse moléculaire moyenne en nombre (Mₙ) du copolymère tribloc, y compris les produits secondaires de synthèse, est supérieure ou égale à 20000 g.mol-¹, et de préférence comprise entre 50000 et 200000 g.mol⁻¹. Avantageusement le copolymère tribloc ABC, y compris les produits secondaires, est constitué de :
- 20 à 93 et de préférence de 30 à 70 parties en poids de séquences A,
- 5 à 68 et de préférence de 10 à 40 parties en poids de séquences B,
- 2 à 65 et de préférence de 5 à 40 parties en poids de séquences C.

**S'agissant du liant et** d'abord la diamine de formule (1) on peut citer à titre d'exemple les diamines dans lesquelles R1 et R2 désignent H (pipérazine), et celles dans lesquelles R1 est H et R2 est -CH2-CH2-NH2.

A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés (ces acides gras dimérisés ont une teneur en dimère d'au moins 98% et sont de préférence hydrogénés) et l'acide dodécanédioïque HOOC-(CH₂)₁₀-COOH.

La condensation de la diamine de formule (1) avec le diacide s'effectue selon les techniques connues de synthèse des polyamides. On peut utiliser un mélange de diacides et/ou un mélange de diamines de formule (1).

Le liant peut comprendre d'autres motifs choisis parmi les acides alpha omega amino carboxyliques et des diamines différentes de la diamine de la formule (1). A titre d'exemple d'acide alpha omega amino carboxylique on peut citer les acides aminocaproïques, amino-7-heptanoïque, amino-11-undécanoïque et amino-12-dodécanoïque. On ne sortirait pas du cadre de l'invention en remplaçant l'acide alpha omega amino carboxylique par le lactame correspondant s'il existe. A titre d'exemple de lactame on peut citer le caprolactame, l'oenantholactame et le lauryllactame. L'autre diamine peut être une diamine aliphatique ayant de 6 à 12 atomes, elle peut être arylique et/ou cyclique saturée. A titre d'exemples on peut citer l'hexaméthylènediamine, la tetraméthylène diamine, l'octaméthylène diamine, la decaméthylène diamine, la dodecaméthylène diamine, le 1,5 diaminohexane, le 2,2,4-triméthyl-1,6-diamino-hexane, les polyols diamine, l'isophorone diamine (IPD), le méthyle pentaméthylènediamine (MPDM), la bis(aminocyclohéxyl) méthane (BACM), la bis(3-méthyl-4 aminocyclohéxyl) méthane (BMACM), le PACM qui désigne le para amino dicyclohexylméthane et la métaxylylène diamine (MXD).

Avantageusement le liant contient au moins 50% en poids de motifs constitués des restes de la diamine de formule (1) condensés avec le diacide.

**Selon une autre forme de l'invention le liant est un copolymère à blocs polyamides et blocs polyethers,** les blocs polyamides résultant de la condensation d'au moins un diacide et d'au moins une diamine de formule (1). C'est à dire que les blocs polyamides du copolymère à blocs polyamides et blocs polyether sont le liant décrit dans le paragraphe précédent.

Les copolymères à blocs polyamides et blocs polyéthers résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides.

Les séquences polyamides à bouts de chaînes carboxyliques sont obtenues en utilisant un limiteur de chaîne diacide c'est à dire qu'on effectue la condensation de la diamine de formule (1) et du diacide avec un excès de ce diacide ou en ajoutant un autre diacide. Les séquences polyamides à bouts de chaînes diamines sont obtenues en utilisant un limiteur de chaîne diamine c'est à dire qu'on effectue la condensation de la diamine de formule (1) et du diacide avec un excès de cette diamine ou en ajoutant une autre diamine. Les séquences polyamides peuvent comprendre d'autres motifs choisis parmi les acides alpha omega amino carboxyliques et des diamines différentes de la diamine de la formule (1). Des exemples de tels monomères ont été cités plus haut.

Avantageusement le copolymère à blocs polyamides et blocs polyéthers contient au moins 50% en poids de motifs constitués des restes de la diamine de formule (1) condensés avec le diacide.

Les blocs polyether peuvent representer 5 à 85 % en poids du copolymère à blocs polyamides et blocs polyéthers. Les blocs polyether peuvent contenir des motifs oxyde d'éthylène, des motifs oxyde de propylène ou du polytetrahydrofurane (qui conduit aux enchainements polytetraméthylène glycol). On peut aussi utiliser simultanement deux ou trois types de blocs choisis parmi les blocs PEG c'est à dire ceux constitués de motifs oxyde d'éthylène, les blocs PPG c'est à dire ceux constitués de motifs oxyde de propylène et les blocs PTMG c'est à dire ceux constitués de motifs tetraméthylène glycol appelés aussi polytetrahydrofurane.

La quantité de blocs polyether dans le copolymère à blocs polyamides et blocs polyéthers est avantageusement de 10 à 55% et de préférence 20 à 45% en poids du copolymère à blocs polyamides et blocs polyéthers.

Les copolymères de la présente invention sont avantageusement ceux décrits au point 3).

Les copolymères de l'invention peuvent être préparés par tout moyen permettant d'accrocher les blocs polyamide et les blocs polyéther. En pratique **on utilise essentiellement deux procédés l'un dit en 2 étapes, l'autre en une étape.**

**Le procédé en 2 étapes** consiste d'abord à préparer les blocs polyamide à extrémités carboxyliques puis dans une deuxième étape à ajouter le polyéther et un catalyseur. La réaction de préparation du polyamide à extrémités carboxyliques se fait habituellement entre 180 et 300°C, de préférence 200 à 260°C la pression dans le réacteur s'établit entre 5 et 30 bars, on la maintient environ 2 heures. On réduit lentement la pression en mettant le réacteur à l'atmosphère puis on distille l'eau excédentaire par exemple une heure ou deux.

Le polyamide à extrémités acide carboxylique ayant été préparé on ajoute ensuite le polyéther et un catalyseur. On peut ajouter le polyéther en une ou plusieurs fois, de même pour le catalyseur. Selon une forme avantageuse on ajoute d'abord le polyéther, la réaction des extrémités OH du polyéther et des extrémités COOH du polyamide commence avec formations de liaison ester et élimination d'eau ; on élimine le plus possible l'eau du milieu réactionnel par distillation puis on introduit le catalyseur pour achever la liaison des blocs polyamide et des blocs polyéther. Cette deuxième étape s'effectue sous agitation de préférence sous un vide d'au moins 5 mm Hg (650 Pa) à une température telle que les réactifs et les copolymères obtenus soient à l'état fondu. A titre d'exemple cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible. Le catalyseur est défini comme étant tout produit permettant de faciliter la liaison des blocs polyamide et des blocs polyéther par estérification. Le catalyseur est avantageusement un dérivé d'un métal (M) choisi dans le groupe formé par le titane, le zirconium et le hafnium.

A titre d'exemple de dérivé on peut citer les tétraalcoxydes qui répondent à la formule générale M(OR)₄, dans laquelle M représente le titane, le zirconium ou le hafnium et les R, identiques ou différents, désignent des radicaux alcoyles, linéaires ou ramifiés, ayant de 1 à 24 atomes de carbone.

Les radicaux alcoyles en C₁ à C₂₄ parmi lesquels sont choisis les radicaux R des tétraalcoxydes utilisés comme catalyseurs dans le procédé suivant l'invention sont par exemple tels que méthyl, éthyl, propyl, isopropyl, butyl, éthylhexyl, décyl, dodécyl, hexadodécyl. Les catalyseurs préférés sont les tétraalcoxydes pour lesquels les radicaux R, identiques ou différents, sont des radicaux alcoyles en C₁ à C₈. Des exemples de tels catalyseurs sont notamment Zᵣ (OC₂H₅)₄, Zᵣ (O-isoC₃H₇)₄, Zᵣ(OC₄H₉)₄, Zr(OC₅H₁₁)₄, Zᵣ(OC₆H₁₃)₄, H_{f}(OC₂H₅)₄, H_{f}(OC₄H₉)₄, H_{f}(O-isoC₃H₇)₄.

Le catalyseur utilisé dans ce procédé suivant l'invention peut consister uniquement en un ou plusieurs des tétraalcoxydes de formule M(OR)₄ définis précédemment. Il peut encore être formé par l'association d'un ou plusieurs de ces tétraalcoxydes avec un ou plusieurs alcoolates alcalins ou alcalino-terreux de formule (R₁O)ₚY dans laquelle R₁ désigne un reste hydrocarboné, avantageusement un reste alcoyle en C₁ à C₂₄, et de préférence en C₁ à C₈, Y représente un métal alcalin ou alcalino-terreux et p est la valence de Y. Les quantités d'alcoolate alcalin ou alcalino-terreux et de tétraalcoxydes de zirconium ou de hafnium que l'on associe pour constituer le catalyseur mixte peuvent varier dans de larges limites. On préfère toutefois utiliser des quantités d'alcoolate et de tétraalcoxydes telles que la proportion molaire d'alcoolate soit sensiblement égale à la proportion molaire de tétraalcoxyde.

La proportion pondérale de catalyseur, c'est-à-dire du ou des tétraalcoxydes lorsque le catalyseur ne renferme pas d'alcoolate alcalin ou alcalino-terreux ou bien de l'ensemble du ou des tétraalcoxydes et du ou des alcoolates alcalins ou alcalino-terreux lorsque le catalyseur est formé par l'association de ces deux types de composés, varie avantageusement de 0,01 à 5 % du poids du mélange du polyamide dicarboxylique avec le polyoxyalcoylène glycol, et se situe de préférence entre 0,05 et 2 % de ce poids.

A titre d'exemple d'autres dérivés on peut citer aussi les sels du métal (M) en particulier les sels de (M) et d'un acide organique et les sels complexes entre l'oxyde de (M) et/ou l'hydroxyde de (M) et un acide organique. Avantageusement l'acide organique peut être l'acide formique, l'acide acétique, l'acide propionique, l'acide butyrique, l'acide valérique, l'acide caproïque, l'acide caprylique, l'acide lauryque, l'acide myristique, l'acide palmitique, l'acide stéarique, l'acide oléique, l'acide linolique, l'acide linolénique, l'acide cyclohexane carboxylique, l'acide phénylacétique, l'acide benzoïque, l'acide salicylique, l'acide oxalique, l'acide malonique, l'acide succinique, l'acide glutarique, l'acide adipique, l'acide maléique, l'acide fumarique, l'acide phtalique et l'acide crotonique. Les acides acétique et propionique sont particulièrement préférés. Avantageusement M est le zirconium. Ces sels peuvent s'appeler sels de zirconyle. La demanderesse sans être liée par cette explication pense que ces sels de zirconium et d'un acide organique ou les sels complexes cités plus haut libèrent ZrO⁺⁺ au cours du procédé. On utilise le produit vendu sous le nom d'acétate de zirconyle. La quantité à utiliser est la même que pour les dérivés M(OR)₄.

Ce procécé et ces catalyseurs sont décrits dans les brevets US 4,332,920, US 4,230,838, US 4,331,786, US 4,252,920, JP 07145368A, JP 06287547A, et EP 613919.

**S'agissant du procédé en une étape** on mélange tous les réactifs utilisés dans le procédé en deux étapes c'est-à-dire les précurseurs de polyamide, le polyéther et le catalyseur. Il s'agit des mêmes réactifs et du même catalyseur que dans le procédé en deux étapes décrit plus haut.

Le copolymère a essentiellement les mêmes blocs polyéthers, les mêmes blocs polyamides, mais aussi une faible partie des différents réactifs ayant réagi de façon aléatoire qui sont répartis de façon statistique le long de la chaîne polymère.

On ferme et on chauffe le réacteur sous agitation comme dans la première étape du procédé en deux étapes décrit plus haut. La pression s'établit entre 5 et 30 bars. Quand elle n'évolue plus on met le réacteur sous pression réduite tout en maintenant une agitation vigoureuse des réactifs fondus. La réaction est suivie comme précédemment pour le procédé en deux étapes.

Le catalyseur utilisé dans le procédé en une étape est de préférence un sel du métal (M) et d'un acide organique ou un sel complexe entre l'oxyde de (M) et/ou l'hydroxyde de (M) et un acide organique.

La couche de liant peut comprendre des additifs, des charges pourvu qu'ils n'alterent pas les propriétés d'adhésion.

**S'agissant du substrat** on peut citer à titre d'exemple :
- les polymères chlorés : PVC, PVC plastifié, PE chloré
- les polymères et copolymères contenant du styrène tel que ABS, SAN, PS,
- les polyesters saturés (PET, PBT, ...) et copolyesters ou mélanges, les résines polyesters insaturées (SMC),
- les résines époxy et phénoliques,
- les copolymères de l'éthylène et d'alkylacrylate ou d'acétate (EMA, EVA) fonctionnalisés ou non,
- les PA (polyamides) et CoPA (copolyamides), PEBA, polyesteramides et TPU (polyurethane thermoplastique, abréviation de Thermoplastic polyurethane),
- EVOH (copolymère de l'éthylène et de l'alcool vinylique),
- l'aluminium, l'acier ou des mélanges de métaux,
- les composites à base de lignine,
- les composés acryliques (PMMA, ...),
- le verre,
- le polyéthylène particulièrement le polyéthylène haute densité,
- les mousses PVC, PU.

### [Exemples]

On a utilisé les produits suivants :
**Liant A** Copolyamide résultant de la condensation de la pipérazine, de l'acide azelaique, de l'acide dodecanedioïque, du lauryllactame et de l'acide amino undecanoique. Le MFI (Melt Flow Index ou indice de fluidité à l'état fondu) est de 5 g/ 10 min (150°C - 2.16 kg).
**Liant B** (non conforme à l'invention) : Copolyamide résultant de la condensation de l'acide adipique, de l'hexamèthylène diamine, du caprolactame et du lauryllactame. Le MFI (Melt Flow Index ou indice de fluidité à l'état fondu) est de 7 g/ 10 min (150°C - 2.16 kg).
**Kynar® 720** : (PVDF homopolymère de MVI (Melt Volume Index ou indice de fluidité en volume à l'état fondu) 10 cm³/10 min (230°C , 5kg)).
**Kynar® 710** : (PVDF homopolymère de MVI (Melt Volume Index ou indice de fluidité en volume à l'état fondu) 20 cm³/10 min (230°C , 5kg)).

### Préparation du liant A :

Préparation du copolymère Pip.9/Pip.12/11 en proportions 15/70/15. Les monomères suivants sont introduits dans un autoclave qui est équipé d'un agitateur : 3565 g pipérazine, 1669 g acide azelaïque (C9), 7642 g acide dodecanedioïque (C12) et 2250 g acide amino undecanoïque et 50 g H₂O.

Le mélange ainsi formé est mis sous atmosphère inerte et chauffé jusqu'à ce que la température atteigne 260°C en maintenant une agitation vigoureuse dès la fusion des réactifs. Pendant 2 heures on maintient 260°C et 25 bars de pression (précondensation). Ensuite on diminue la pression lentement (1 h) de 25 bars à la pression atmosphérique en maintenant la température à 260. Pendant 1 heure on poursuit la polycondensation du mélange réactionnel par passage d'un flux constant d'azote (balayage d'azote). Ensuite on soumet le mélange réactionnel à une pression absolue de 30 mbar pendant environ une demi-heure toujours à T = 260°C. Le produit est extrudé dans un bain d'eau et granulé. Le produit obtenu a une viscosité rélative en solution (m-crésol, 0,5g/100ml, T=25°C, DIN 53727) de 1,56, un MVR (150°C;2,16kg; ISO 1133) a l'état sec de 5,1 cm³/10min et une température de fusion (optiquement déterminé, DIN 53736 B ) de 120-130°C

### Préparation du liant B :

On utilise le même procédé que pour le liant A.

### Réalisation de films bicouches liant A / Kynar

Des films bi-couches liant A / Kynar720 (20µm / 30µm) ont été obtenus par un procédé de soufflage de gaine sur une ligne de marque Kiefel® (diamètre de la filière de 225 mm et utilisation d'un taux de gonflage conduisant à une largeur de 700 mm). Les extrudeuses pour le Kynar720 et le liant A ont respectivement des diamètres de 50 et 60 mm et des longeurs égales à 25D et 29D (D désigne le diamètre de la ou des vis de l'extrudeuse). Ces deux extrudeuses présentent un profil de type polyéthylène. La température d'extrusion pour le liant est située entre 140 et 180°C alors que celle du PVDF est comprise entre 210 et 250°C. A l'issue de cette opération, les films sont pressés sur divers substrats. Un test de pelage (200 mm/min, angle de 90°) est réalisé sur la structure finale. Le tableau suivant regroupe les résultats :

| Substrat | Adhésion |
|---|---|
| Bois Fasal F197® | 14 N/15mm, amorçage localisé à l'interface bois / liant A. Pressage du film à 160°C |
| Acier dégraissé | Amorçage à l'interface liant / Kynar720 mais rupture instantanée du Kynar720. Pressage à 160°C |
| SMC (polyester insaturé) Norsodyne®(Cray valley®) | Amorçage mais rupture instantanée |
| Pressage du Film [liant A / Kynar720] sur lui même. La structure devient [*Kynar 720* / *liant A*/ *liant A* / *Kynar 720*] | Pas d'amorçage possible à 160°C |

A titre de comparaison, une structure bi-couche liant B / Kynar(720 ou 710) ne présente pas d'adhésion

### Coextrusion feuilles :

Des structures tri-couches PVC / liant A / Kynar720 ou Kynar710 (1.9mm/90µm/140µm) ont été réalisées sur une ligne de coextrusion calandrage tricouche de marque AMUT® à travers une filière multicanal (trois canaux) de marque Verbruggen®. Le PVC utilisé est un Nakan® PEY001E. La couche de Kynar est extrudée sur une machine de diamètre 45 mm et de longueur égale à 28D à une température comprise entre 220 et 250°C. L'extrudeuse utilisée pour la couche de liant A a un diamètre de 45 mm et une longueur de 26D. La température est régulée entre 120 et 150°C. Le PVC quand à lui est extrudé sur une bi-vis conique contrarotative de diamètre 60 mm à une température comprise entre 170 et 195°C.
L'amorçage est possible aux deux interfaces mais il n'y a pas de propagation.

## Revendications

1. Structure comprenant une couche de polymère fluoré et directement attachée sur l'une de ses faces une couche de liant à base de polyamide qui résulte de la condensation d'au moins un diacide et d'au moins une diamine de formule (1) suivante : 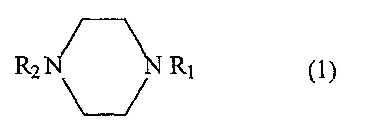 dans laquelle :
R₁ représente H ou -Z1-NH2 et Z1 représente un alkyle, un cycloalkyle ou un aryle ayant jusqu'à 15 atomes de carbone,
et R₂ représente H ou -Z2-NH2 et Z2 représente un alkyle, un cycloalkyle ou un aryle ayant jusqu'à 15 atomes de carbone,
R₁ et R₂ pouvant être identiques ou différents.

2. Structure selon la revendication 1 dans laquelle le liant comprend d'autres motifs choisis parmi les acides alpha omega amino carboxyliques et des diamines différentes de la diamine de la formule (1).

3. Structure selon la revendication 1 dans laquelle le liant est un copolymère à blocs polyamides et blocs polyethers, les blocs polyamides résultant de la condensation d'au moins un diacide et d'au moins une diamine de formule (1).

4. Structure selon la revendication 3 dans laquelle les blocs polyamides du liant comprennent d'autres motifs choisis parmi les acides alpha omega amino carboxyliques et des diamines différentes de la diamine de la formule (1).

5. Structure selon l'une quelconque des revendications précédentes comprenant en plus du coté du liant une couche de substrat.

6. Structure selon l'une quelconque des revendications 1 à 4 comprenant en plus du coté du polymère fluoré une autre couche de liant.

7. Structure selon l'une quelconque des revendications précédentes dans laquelle le polymère fluoré est le PVDF homopolymère ou copolymère.

8. Structure selon l'une quelconque des revendications précédentes dans laquelle la couche de polymère fluoré comprend au moins un produit choisi parmi les additifs, les charges, un ou plusieurs produits électroconducteurs, les modifiants choc du type core shell (coeur écorce) acrylique, les polymères (P1) constitués essentiellement de motifs (meth)acrylate d'alkyle et pouvant contenir un modifiant choc acrylique du type core shell, les copolymères à blocs et particulièrement ceux du type ABC.
